# EUROPEAN PATENT SPECIFICATION

(11) **EP 3 142 298 B1**
(45) Date of publication and mention of the grant of the patent: **23.01.2019**
(21) Application number: 16187339.3
(22) Date of filing: 06.09.2016
(51) Int. Cl.: H04L 12/24, H04L 29/14, H04L 29/08, H04L 29/06, H04L 12/26

(54) **SECURITY INSPECTION TERMINAL, SECURITY INSPECTION NETWORK SYSTEM AND SECURITY INSPECTION DATA TRANSMISSION METHOD**
SICHERHEITSPRÜFUNGSENDGERÄT, SICHERHEITSPRÜFUNGSNETZWERKSYSTEM UND SICHERHEITSPRÜFUNGSDATENÜBERTRAGUNGSVERFAHREN
TERMINAL D'INSPECTION DE SÉCURITÉ, SYSTÈME DE RÉSEAU D'INSPECTION DE SÉCURITÉ ET PROCÉDÉ DE TRANSMISSION DE DONNÉES D'INSPECTION DE SÉCURITÉ

(30) Priority: 10.09.2015 CN 201510573816
(43) Date of publication of application: 15.03.2017
(73) Proprietor: Nuctech Company Limited, TongFang Building, Shuangqinglu, Haidian District Beijing 100084 (CN)
(72) Inventor: TIAN, Long, Beijing, Beijing 100084 (CN); WANG, Tao, Beijing, Beijing 100084 (CN); WU, Nannan, Beijing, Beijing 100084 (CN)
(74) Representative: Held, Stephan

(56) References cited:
- US-A1- 2008 066 181
- US-A1- 2008 229 422
- US-A1- 2008 263 221
- US-B2- 8 407 472
- HAO YIN ET AL: "LiveSky", ACM TRANSACTIONS ON MULTIMEDIA COMPUTING COMMUNICATIONS ANDAPPLICATIONS, ASSOCIATION FOR COMPUTING MACHINERY, US, vol. 6, no. 3, 27 August 2010 (2010-08-27) , pages 1-19, XP058167370, ISSN: 1551-6857, DOI: 10.1145/1823746.1823750

## Description

### FIELD OF THE INVENTION

The present invention relates to the field of security inspection, and in particular to a security inspection terminal, a security inspection network system and a security inspection data transmission method.

### BACKGROUND OF THE INVENTION

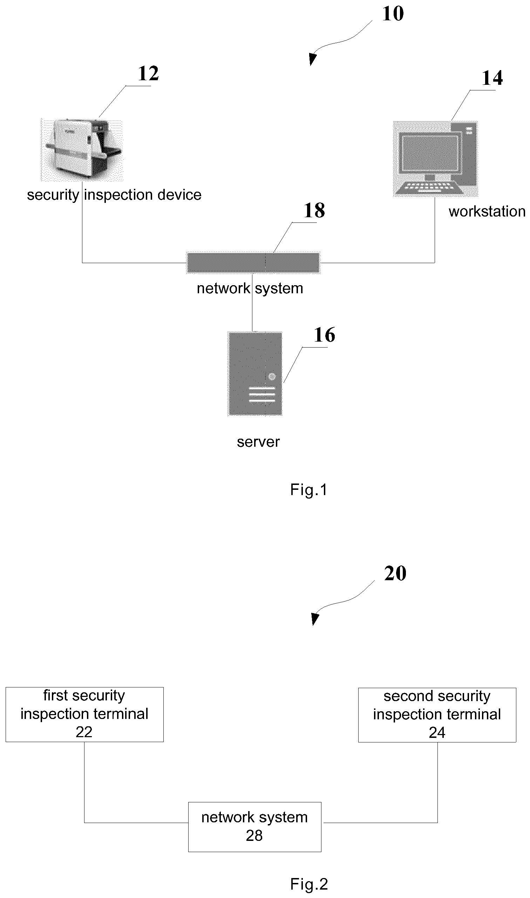

At present, in a common security inspection network system 10 shown in Fig.1, a security inspection device 12 and a workstation 14 are generally connected to a server 16 through a network system 18. Some critical configuration information relating to the operation of the system are saved in the server 16, and the server 16 is required by the security inspection device 12 and the workstation 14 for realizing cooperation and communication. During the operation of the system, the security inspection device 12 transmits information and data to the server 16 through the network system 18, and the server 16 transmits information and data to the corresponding workstation 14 according to some preset rules.

The above-mentioned security inspection network system 10 has the following defects:
1) The server 16 is a key node for the operation of the whole security inspection network system 10 and critical configuration information relating to the operation of the security inspection network system 10 are saved in the server 16, so the whole security inspection network system 10 will break down and can't keep running once a malfunction occurs in the server 16, even if both the security inspection device 12 and the workstation 14 keep in a normal state.
2) A malfunction possibly occurs in a key node of the network system 18, as a result, a network link to the server 16 is disconnected and the whole security inspection network system 10 cannot keep running normally.

Document US 2008/066181 discloses a peer-to-peer data delivery system between two terminals, where they search each other based on the correspondence information. Document US 8 407 472 discloses a peer-to-peer data transmission system with wireless connections organized by a server or directly among the peers. However, both of these documents are silent about the failure recovery after the failure of the server in the respective systems.

### SUMMARY OF THE INVENTION

In order to solve the above defects in the existing security inspection network system, the present invention is directed to a security inspection terminal, a security inspection network system and a security inspection data transmission method as set out in the appended claims.

According to an aspect of the invention, a security inspection terminal is provided, which is a first security inspection terminal, comprising: a searching unit for searching for a second security inspection terminal which can be accessed by said first security inspection terminal; a connecting unit for connecting said first security inspection terminal to said second security inspection terminal searched by said searching unit; and a transmitting unit for transmitting security inspection data between said first security inspection terminal and said second security inspection terminal connected by said connecting unit, wherein said first security inspection terminal is one of a security inspection device and a workstation in a security inspection network system, and said second security inspection terminal is the other of said security inspection device and said workstation in said security inspection network system.

In an embodiment of the present invention, the first security inspection terminal further comprises: a detecting unit for detecting whether a server in said security inspection network system can be accessed or not, and for triggering said searching unit to search for said second security inspection terminal when said server can not be accessed.

In an embodiment of the present invention, said searching unit is used for searching for said second security inspection terminal which can be accessed by said first security inspection terminal according to correspondence relationship information between said first security inspection terminal and said second security inspection terminal in said security inspection network system.

In an embodiment of the present invention, the first security inspection terminal further comprises: said first security inspection terminal further comprises: a correspondence relationship information acquiring unit for acquiring said correspondence relationship information between said first security inspection terminal and said second security inspection terminal in said security inspection network system,
said correspondence relationship information acquiring unit comprises at least one of a first correspondence relationship information acquiring module, a second correspondence relationship information acquiring module and a third correspondence relationship information acquiring module, wherein:
said first correspondence relationship information acquiring module is used for downloading said correspondence relationship information from said server when said server can be accessed ;
said second correspondence relationship information acquiring module is used for reading pre-configured correspondence relationship information; and
said third correspondence relationship information acquiring module is used for acquiring said correspondence relationship information by the cooperation of said first security inspection terminal and said second security inspection terminal.

In an embodiment of the present invention, said third correspondence relationship information acquiring module is further used for detecting all second security inspection terminals to which said first security inspection terminal can be connected and saving said correspondence relationship information between said first security inspection terminal and all said second security inspection terminals to which said first security inspection terminal can be connected.
said third correspondence relationship information acquiring module is further used for: detecting one or a plurality of other first security inspection terminals to which said first security inspection terminal can be connected, and receiving, from said one or a plurality of other first security inspection terminals, synchronization information including information on all said second security inspection terminals to which said one of a plurality of other first security inspection terminals can be connected, and saving said correspondence relationship information between said one or a plurality of other first security inspection terminals and all said second security inspection terminals to which said one or a plurality of other first security inspection terminal can be connected .

In an embodiment of the present invention, said third correspondence relationship information acquiring module is further used for acquiring said correspondence relationship information by cooperating with said second security inspection terminal when said first security inspection terminal can not access said server in said security inspection network system.

In an embodiment of the present invention, said searching unit is further used for searching for all corresponding second security inspection terminals to said first security inspection terminal based on said correspondence relationship information, and searching for an accessible second security inspection terminal from all corresponding second security inspection terminals by testing the connectivity between said first security inspection terminal and each of corresponding second security inspection terminals.

In an embodiment of the present invention, said first security inspection terminal further comprises: a storage unit for storing said security inspection data transmitted between said first security inspection terminal and said second security inspection terminal when said server can not be accessed, and uploading said security inspection data to said server when said server can be accessed.

In another aspect of the invention, a security inspection network system is provided. said security inspection network system comprises at least one first security inspection terminal and at least one second security inspection terminal, wherein said first security inspection terminal is one of a security inspection device and a workstation in a security inspection network system, and said second security inspection terminal is the other of said security inspection device and said workstation in said security inspection network system.

In an embodiment of the invention, the security inspection network system further comprises a server.

In a further aspect of the invention, a security inspection data transmission method is provided, comprising: searching step of searching for a second security inspection terminal which can be accessed by a first security inspection terminal; connecting step of connecting said first security inspection terminal to said second security inspection terminal which can be accessed by said first security inspection terminal; and transmitting step of transmitting security inspection data between said first security inspection terminal and said second security inspection terminal which can be accessed by said first security inspection terminal, wherein said first security inspection terminal is one of a security inspection device and a workstation in a security inspection network system, and said second security inspection terminal is the other of said security inspection device and said workstation in said security inspection network system.

In an embodiment of the present, said method further comprises: a detecting step of detecting whether a server in said security inspection network system can be accessed or not before said searching step and searching for said second security inspection terminal which can be accessed by said first security inspection terminal when said server can not be accessed.

In an embodiment of the present, said searching step comprises: a step of searching for said second security inspection terminal which can be accessed by said first security inspection terminal according to correspondence relationship information between said first security inspection terminal and said second security inspection terminal in said security inspection network system.

In an embodiment of the present, said first security inspection terminal acquires said correspondence relationship information between said first security inspection terminal and said second security inspection terminal by any one of following steps:
a step of downloading said correspondence relationship information from said server when said server can be accessed;
a step of reading pre-configured correspondence relationship information; and
a step of acquiring said correspondence relationship information by the cooperation of said first security inspection terminal and said second security inspection terminal.

In an embodiment of the present, when said correspondence relationship information is acquired in said manner of acquiring said correspondence relationship information by the cooperation of said first security inspection terminal and said second security inspection terminal , said first security inspection terminal detects all second security inspection terminals to which said first security inspection terminal can be connected and saves correspondence relationship information between said first security inspection terminal and all said second security inspection terminals to which said first security inspection terminal can be connected.

In an embodiment of the present, when said correspondence relationship information is acquired in said manner of acquiring said correspondence relationship information by the cooperation of said first security inspection terminal and said second security inspection terminal, said first security inspection terminal detects one or a plurality of other first security inspection terminals to which said first security inspection terminal can be connected ; and said first security inspection terminal receives, from said one or a plurality of other first security inspection terminals, synchronization information including information on all said second security inspection terminals to which said one of a plurality of other first security inspection terminals can be connected, and saving said correspondence relationship information between said one or a plurality of other first security inspection terminals and all said second security inspection terminals to which said one or a plurality of other first security inspection terminal can be connected.

In an embodiment of the present, said correspondence relationship information is acquired by cooperating with said second security inspection terminal when said first security inspection terminal can not access said server in said security inspection network system.

In an embodiment of the present, said searching step comprises: first security inspection terminal searches for all corresponding second security inspection terminals to said first security inspection terminal based on said correspondence relationship information, and searching for an accessible second security inspection terminal from all corresponding second security inspection terminals by testing the connectivity between said first security inspection terminal and each of corresponding second security inspection terminals.

In an embodiment of the present, said method further comprises: a step of storing said security inspection data transmitted between said first security inspection terminal and said second security inspection terminal when said server can not be accessed, and uploading said security inspection data to said server when said server can be accessed.

The present invention proposes a security inspection network solution without taking a server as center. In the solution, the security inspection terminals can be inter-connected by extending the function of the security inspection terminal , so the fault-tolerance capability of the system is increased and stability and reliability of the system is improved. For example, even if the server malfunction, the security inspection device and the workstation still can directly communicate with each other through the network system without by the aid of the server, or, even if the network system malfunctions, the security inspection device and the workstation still can communicate with each other normally so long as the malfunction does not influence on the connection between the security inspection device and the workstation. Furthermore, after the server or the network system returns to normal, the data during the malfunction can be automatically synchronized to the server and is stored in the server for the use of subsequent processing.

Further features and advantages of the present invention will become apparent from the following detailed illustrations of embodiments of the invention with reference to the accompanying drawings.

### BRIEF DESCRIPTION OF THE DRAWINGS

In order to describe more clearly the embodiments of the invention or the technical solutions in the prior art, the drawings to be used for describing the embodiments or the prior art are briefly discussed as below. But it is obvious that the drawings described below merely are directed to some embodiments of the invention, and those skilled in the art could obtain other drawings from the accompanying drawings without any inventive efforts.
Fig.1 is a schematic diagram showing the existing security inspection network system.
Fig.2 is a schematic diagram showing an embodiment of the security inspection network system according to the invention.
Fig.3 is a schematic diagram showing a further embodiment of the security inspection network system according to the invention.
Fig.4 is a schematic diagram showing a still further embodiment of the security inspection network system according to the invention.
Fig.5 is a schematic diagram showing a flowchart of an embodiment of the security inspection data transmission method according to the invention.
Fig.6 is a schematic diagram showing the security inspection network system according to the invention when the server malfunctions.
Fig.7 is a schematic diagram showing the security inspection network system according to the invention when the network system malfunctions but the security inspection device and the workstation can still communicate each other directly.
Fig.8 is a schematic diagram showing a flowchart of a further embodiment of the security inspection data transmission method according to the invention.
Fig.9 is a schematic diagram showing a correspondence relationship between the security inspection devices and the workstations in the security inspection network system in an initial state, according to an embodiment of the invention.
Fig.10 is a schematic diagram showing a connection relationship between the security inspection devices and the workstations after the network system malfunctions according to an embodiment of the invention.
Fig.11 is a schematic diagram showing a flowchart of a still further embodiment of the security inspection data transmission method according to the invention.
Fig.12 is a schematic diagram showing an embodiment of the security inspection terminal according to the invention.
Fig.13 is a schematic diagram showing a further embodiment of the security inspection terminal according to the invention.
Fig.14 is a schematic diagram showing a still further embodiment of the security inspection terminal according to the invention.
Fig.15 is a schematic diagram showing another embodiment of the security inspection terminal according to the invention.

### DETAILED DESCRIPTION OF THE EMBODIMENTS

The technical solutions in the embodiments of the invention will be described clearly and comprehensively below in combination with the accompanying drawings.

The existing security inspection network system takes a server as the center, and the security inspection devices and the workstations communicate with each other by the server, so the server and the network system connected to the server become a bottleneck, and once a malfunction occurs in the bottleneck, the normal operation of the whole security inspection network system will be affected.

In view of above, the present invention is directed to a security inspection network solution without taking a server as center. In the solution, the security inspection terminals can be inter-connected by extending the function of the security inspection terminal, thereby the influences of the server and the network system connected to the server to the normal operation of the whole security inspection network system will be reduced.

In the present invention, the first security inspection terminal and the second security inspection terminal are used for discriminatively representing different types of security inspection terminals. For example, the security inspection terminal comprises, but not limited to, security inspection device and workstation. For example, if the first security inspection terminal is a security inspection device, the second security inspection terminal is a workstation; and if the first security inspection terminal is a workstation, the second security inspection terminal is a security inspection device.

Fig.2 is a schematic diagram showing an embodiment of the security inspection network system according to the invention.

As shown in Fig.2, the security inspection network system 20 according to the present embodiment comprises at least one first security inspection terminal 22 and at least one security inspection terminal 24. The network connections are established through the network system 28 between various first security inspection terminals 22, between various second security inspection terminals 24, and between a first security inspection terminal 22 and a second security inspection terminal 24.

In a security inspection network system with a few security inspection devices and workstations, the server may be eliminated to decrease the number of devices and reduce costs.

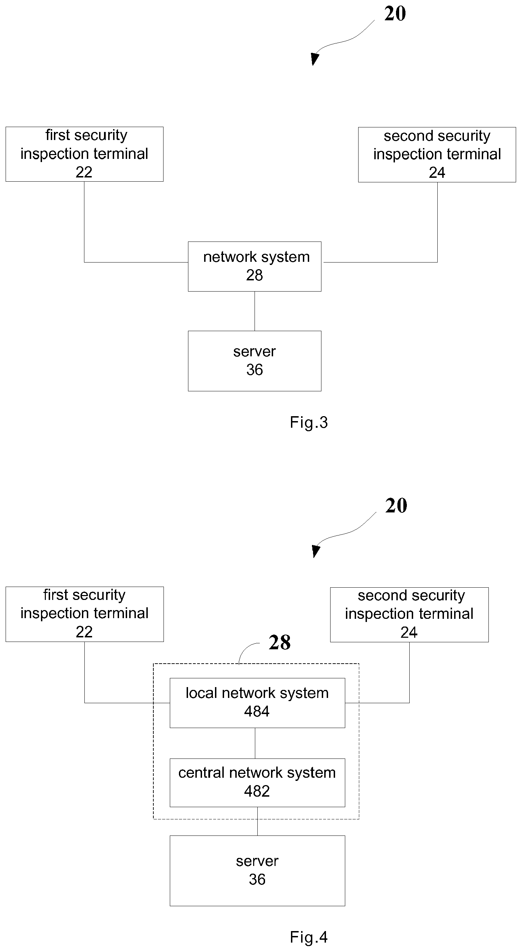

Fig.3 is a schematic diagram showing a further embodiment of the security inspection network system according to the invention.

As shown in Fig.3, the security inspection network system 20 according to the present embodiment further comprises a server 36. A network connection is also made between various first security inspection terminals 22 and the server 36, and between various second security inspection terminals 24 and the server 36, through the network system 28.

Fig.4 is a schematic diagram showing a still further embodiment of the security inspection network system according to the invention.

As shown in Fig.4, the network system 28 connecting the various devices together can be further subdivided into a central network system 482 and a local network system 484. The first security inspection terminal 22 and the second security inspection terminal 24 are connected to a certain local network system 484, and various local network systems 484 are connected to the server 36 through the central network system 482.

A process that the devices in the security inspection network system 20 cooperate for security inspection data transmission is described below.

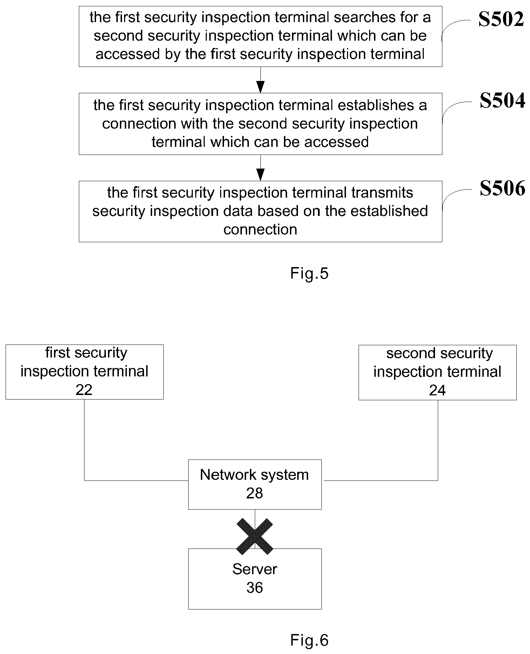

Fig.5 is a schematic diagram showing a flowchart of an embodiment of the security inspection data transmission method according to the invention.

As shown in Fig.5, the security inspection data transmission method according to the present embodiment comprises the following steps:
S502: the first security inspection terminal searches for a second security inspection terminal which can be accessed by the first security inspection terminal.

More specifically, the first security inspection terminal is a security inspection device and the second security inspection terminal is a workstation, or the first security inspection terminal is a workstation and the second security inspection terminal is a security inspection device.

S504: the first security inspection terminal establishes a connection with the second security inspection terminal which can be accessed.

More specifically, a rule may be set such that, if the first security inspection terminal finds a plurality of accessed second security inspection terminals, one accessed second security inspection terminal is selected from those for establishing a connection with the first security inspection terminal and transmitting security inspection data between the first security inspection terminal and the accessed second security inspection terminal. If necessary, the rule may be also set such that more than one or all of the accessed second security inspection terminals are selected for establishing a connection with the first security inspection terminal and transmitting security inspection data between the first security inspection terminal and the accessed second security inspection terminals.

S506: the first security inspection terminal transmits security inspection data based on the established connection.

In the security inspection data transmission method according to the present embodiment, the security inspection terminals can be inter-connected by extending the function of the security inspection terminal , so the fault-tolerance capability of the system is increased and stability and reliability of the system is improved. The method applies to both of a security inspection network system without a server (as shown in Fig.2) and a security inspection network system with a server (as shown in Figs.3 and 4).

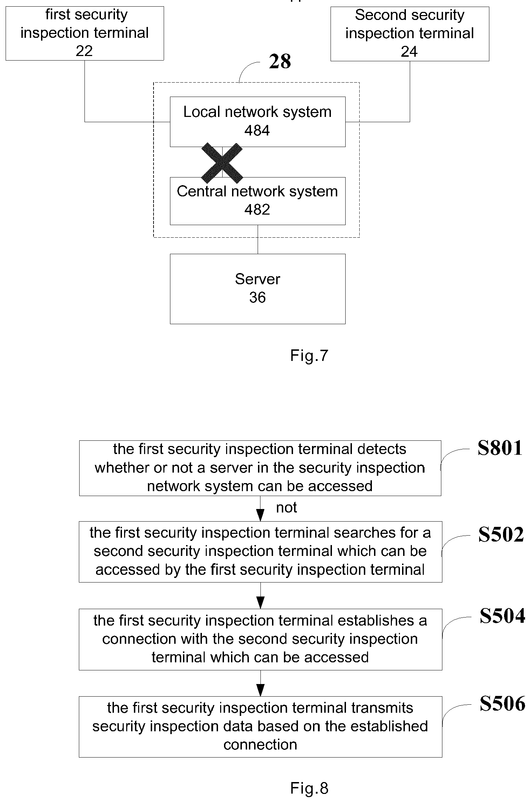

In security inspection network system with a server, even if the server malfunctions (as shown in Fig.6), or even if the network system malfunctions, the security inspection device and the workstation still can communicate normally by using the security inspection data transmission method according to the present embodiment so long as the malfunction does not influence on the connection between the security inspection device and the workstation (as shown in Fig.7).

Fig.8 is a schematic diagram showing a flowchart of a further embodiment of the security inspection data transmission method according to the invention.

As shown in Fig.8, the security inspection data transmission method according to the present embodiment further comprises, before the step of S502 of searching for a second security inspection terminal which can be accessed by the first security inspection terminal:
S801: the first security inspection terminal detects whether or not a server in the security inspection network system can be accessed, and in response to a detection result indicating the server can not be accessed, executes the step S502 of searching for an accessed second security inspection terminal. In response to a detection result indicating the server can be accessed, the first security inspection terminal and the second security inspection terminal can communicate with each other by the server.

The security inspection data transmission method according to the present embodiment is applicable to a security inspection network system with a server (as shown in Figs.3 and 4), and in case that the server can not be accessed, the security inspection terminals can directly communicate with each other by using the method of the invention. Moreover, communication mode of security inspection terminals communicating with each other directly or by a server can be automatically switched without human intervention.

In the security inspection data transmission method, an implementation for the step 502 of searching for a second security inspection terminal which can be accessed by the first security inspection terminal is illustrated as below. The first security inspection terminal searches for a second security inspection terminal which can be accessed by means of broadcasting. Specifically, the first security inspection terminal sends a broadcast message carrying information on an IP address (IP1) of the first security inspection terminal and so on. The second security inspection terminal returns a response message to the first security inspection terminal corresponding to IP1 after receiving the broadcast message, in which the response message can carry an IP address (IP2) of the second security inspection terminal. Once the first security inspection terminal receives the response message, it is determined that the first security inspection terminal can access the second security inspection terminal corresponding to IP2.

In the security inspection data transmission method, a further implementation for the step 502 of searching for a second security inspection terminal which can be accessed by the first security inspection terminal is illustrated as below. The first security inspection terminal searches for a second security inspection terminal which can be accessed based on correspondence relationship information between the first security inspection terminal and the second security inspection terminal in the security inspection network system. Specifically, the first security inspection terminal searches for the second security inspection terminals corresponding to the first security inspection terminal, based on the correspondence relationship information between the first security inspection terminal and the second security inspection terminal in the security inspection network system, and finds a second security inspection terminal which can be accessed from all second security inspection terminals corresponding to the first security inspection terminal by means of connectivity test between the first security inspection terminal and each corresponding second security inspection terminal.

The table below is an example showing the correspondence relationship information between the first security inspection terminal and the second security inspection terminal in the security inspection network system.

**Table 1**

| Name of the first security inspection terminal | Address of the first security inspection terminal | Name of the second security inspection terminal | Address of the second security inspection terminal |
|---|---|---|---|
| Security inspection device A | 192.168.1.101 | Workstation A | 192.168.1.201 |
| Security inspection device A | 192.168.1.101 | Workstation B | 192.168.1.202 |
| Security inspection device A | 192.168.1.101 | Workstation C | 192.168.1.203 |
| Security inspection device B | 192.168.1.102 | Workstation A | 192.168.1.201 |
| Security inspection device B | 192.168.1.102 | Workstation B | 192.168.1.202 |
| Security inspection device C | 192.168.1.103 | Workstation B | 192.168.1.202 |
| Security inspection device C | 192.168.1.103 | Workstation C | 192.168.1.203 |

By taking the security inspection device A as an example, the security inspection device A searches the correspondence relationship table shown in Table 1 and determines that security inspection device A corresponds to workstation A, workstation B and workstation C, and performs a connectivity test respectively on the workstations based on the address information of the workstations recorded in the correspondence relationship table, and if the test shows the security inspection device A and a corresponding workstation can be connected , the workstation is a workstation which can be accessed by the security inspection device A. For example, if the test shows connectivity between the security inspection device A and its corresponding workstation C, it means that the security inspection device A can access the workstation C.

Furthermore, as an example, the connectivity test may be implemented by using a PING command (a command used in a disk operating system). If the PING operation between two security inspection devices is successful, it means that the two security inspection devices can be connected. The connectivity test also may be implemented by means of request/response message. That is, if one security inspection terminal sends a request message to another security inspection terminal and receives a response message from the another security inspection terminal, it means that the two security inspection terminals can be connected. The connectivity test is not limited to the examples illustrated above but may be implemented by other ways as needed.

The invention further provides many methods of acquiring the correspondence relationship information, and a suitable acquiring method can be selected as required by a scenario or a user.

In a first method of acquiring the correspondence relationship information, after the first security inspection terminal searches a server in the security inspection network system which can be accessed, the first security inspection terminal downloads from the server the correspondence relationship information between the first security inspection terminal and the second security inspection terminal in the security inspection network system. For example, the correspondence relationship information may be downloaded from the server when the first security inspection terminal is started, or the correspondence relationship information may be downloaded from the server at pre-determined time or periodically.

Such an acquiring method is adapted to a security network system comprising a server. Through such a method, the correspondence relationship information can be acquired or updated more efficiently, and the acquired correspondence relationship information has a better consistency.

A second method of acquiring the correspondence relationship information is a pre-configuration method, that is, the first security inspection terminal read the correspondence relationship information pre-configured in the first security inspection terminal.

Such an acquiring method is simple and easily implemented and is adapted to both of a security inspection network system with a server or without a server.

A third method of acquiring the correspondence relationship information is that, the first security inspection terminal acquires the correspondence relationship information in a manner of autonomous cooperation, i.e. by the cooperation of the first security inspection terminal and the second security inspection terminal.

Such an acquiring method is adapted to a security inspection network system without a server or a security inspection network system with a server which cannot be currently detected due to a device malfunction or a network malfunction. Regarding the latter, when it is detected that the server in the security inspection network system can not be accessed, an autonomous cooperation manner is initiated for acquiring the correspondence relationship information.

A process in an autonomous cooperation manner is specifically as follows:
The first security inspection terminal detects all second security inspection terminals which can be connected by the first security inspection terminal, and saves the correspondence relationship information between the first security inspection terminal and all the second security inspection terminals which can be connected. Furthermore, the first security inspection terminal detects other first security inspection terminals which can be connected by the first security inspection terminal and receives synchronization information sent by the other first security inspection terminals, in which the synchronization information includes information on all second security inspection terminals which can be connected by the other first security inspection terminals. Then the first security inspection terminal saves correspondence relationship information between the other first security inspection terminals and all the second security inspection terminals which can be connected by the other first security inspection terminals, such that the first security inspection terminal can obtain a latest correspondence relationship information between all the security inspection terminals in the current security inspection network system. Further, the first security inspection terminal can also synchronize all the second security inspection terminals which can be connected by the first security inspection terminal with the other security inspection network devices which can be connected by the first security inspection terminal, such that the other security inspection network devices can acquire the correspondence relationship information between the first security inspection terminal and all the second security inspection terminals which can be connected by the first security inspection terminal.

In order to clarify the solutions of the invention, an example showing how to create a correspondence relationship between the security inspection terminals in a manner of autonomous cooperation is shown below.

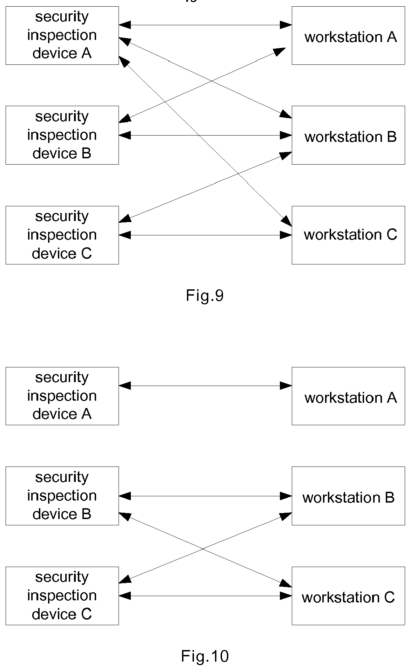

Assume that the security inspection network system comprises security inspection devices A, B, C, and workstations A, B, C. In an initiate state, the correspondence relationship between the security inspection devices and the workstations in the security inspection network system is shown as Table 1 and Fig.9, that is, the security inspection device A corresponds to the workstations A, B, C, and the security inspection device B corresponds to the workstation A, B, and the security inspection device C corresponds to the workstations B, C. The correspondence relationship table is saved respectively in the security inspection devices and workstations. When the network system malfunctions, the connection relationship between the various security inspection devices and the workstations is shown in Fig.10, that is, the security inspection device A and the workstation A can be connected each other, the security inspection devices **B, C** are respectively connected to the workstations B, C, and the security inspection devices B, C can be connected each other, the security inspection device A cannot be connected to the security inspection devices B, C, and all the security inspection devices and the workstations cannot access the server.

By taking the security inspection device B as an example, if it is detected that the security inspection device B can not access the server, the security inspection device B will automatically detects the current network environment, and performs a connectivity test in order between the security inspection device B and the various security inspection devices according to the IP addresses of various security inspection devices recorded in the Table 1. It is found that the security inspection devices B and C can be connected by the test. Then a connectivity test is performed in order between the security inspection device B and the various workstations according to the IP addresses of the various workstations recorded in the Table 1, and if it is found that the security inspection device B can be connected to the workstations B and C, it is recorded that the security inspection device B corresponds to the workstations B and C. The security inspection device B then synchronizes the correspondence relationship between the security inspection device B and the workstations B and C to the security inspection device C. Similarly, if it is detected that the security inspection device C can not access the server, the security inspection device C will automatically detects the current network environment, and if it is found that the security inspection device C can be connected to the security inspection device B and can be connected to the workstations B and C, it is recorded that the security inspection device C corresponds to the workstations B and C, and synchronizes the correspondence relationship between the security inspection device C and the workstations B and C to the security inspection device B. In addition, it is found and recorded that the security inspection device A can be connected to the workstation A.

Upon the completion of the autonomous cooperation process, the security inspection devices B and C save the correspondence relationship table between the various devices in the current security inspection network system as shown in following Table 2. The security inspection device B can be connected to and directly communicate with the workstations B and C. The security inspection device C can be connected to and directly communicate with the workstations B and C.

**Table 2**

| Name of the first security inspection device | Address of the first security inspection device | Name of the second security inspection device | Address of the second security inspection device |
|---|---|---|---|
| security inspection device B | 192.168.1.102 | Workstation B | 192.168.1.202 |
| security inspection device B | 192.168.1.102 | Workstation C | 192.168.1.203 |
| security inspection device C | 192.168.1.103 | Workstation B | 192.168.1.202 |
| security inspection device C | 192.168.1.103 | Workstation C | 192.168.1.203 |

Upon the completion of the autonomous cooperation process, the security inspection device A saves the correspondence relationship table between the various devices in the current security inspection network system as shown in following Table 3. The security inspection device A can be connected to and directly communicate with the workstation A.

**Table 3**

| Name of the first security inspection device | Address of the first security inspection device | Name of the second security inspection device | Address of the second security inspection device |
|---|---|---|---|
| security inspection device A | 192.168.1.101 | Workstation A | 192.168.1.201 |

As stated above, when the security inspection device cannot access the server due to reasons such as network malfunction, after a security inspection device in the system detects the malfunction, above-mentioned automatic detection will be initiated immediately to recreate a correspondence relationship between the security inspection devices, and the system will be intelligently switched to a direct communication mode between the security inspection terminals, thereby the system will restore to the normal state.

Furthermore, after the first security inspection terminal establishes a connection with a certain second security inspection terminal, if the second security inspection terminal establishes a connection further with the server, the second security inspection terminal will cut off the connection with the server and directly communicates with the first security inspection terminal. Therefore, the confliction occurring when the connectivity between the two security inspection terminals having a correspondence relationship and the server are inconsistent is resolved.

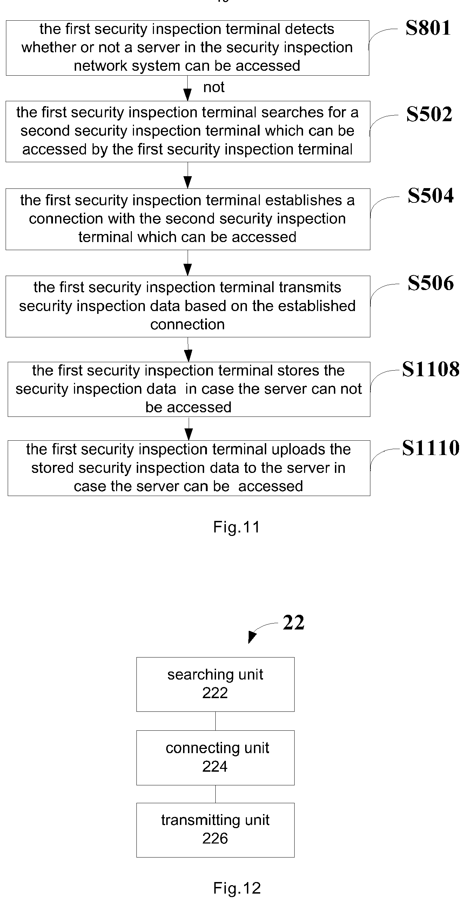

Fig.11 is a schematic diagram showing a flowchart of a still further embodiment of the security inspection data transmission method according to the invention.

As shown in Fig.11, the security inspection data transmission method according to the present embodiment, after the step of S506 of transmitting the security inspection data , further comprises:
S1108 , in which the first security inspection terminal stores the security inspection data transmitted by the first security inspection terminal and the second security inspection terminal in case the server can not be accessed, and
S1110 , in which the first security inspection terminal uploads the stored security inspection data to the server in case the server can be accessed to automatically synchronize the security inspection data during the malfunction to the server for the usage of subsequent processing.

Fig.12 is a schematic diagram showing an embodiment of the security inspection terminal according to the invention.

As shown in Fig.12, the security inspection terminal according to the present embodiment is a first security inspection terminal 22 comprising a searching unit 222 for searching for a second security inspection terminal which can be accessed by the first security inspection terminal, a connecting unit 224 for connecting said first security inspection terminal to said second security inspection terminal searched by said searching unit 222; and a transmitting unit 226 for transmitting security inspection data between said first security inspection terminal and said second security inspection terminal connected by said connecting unit 224, wherein the first security inspection terminal is a security inspection device and the second security inspection terminal is a workstation, or the first security inspection terminal is a workstation and the second security inspection terminal is a security inspection device.

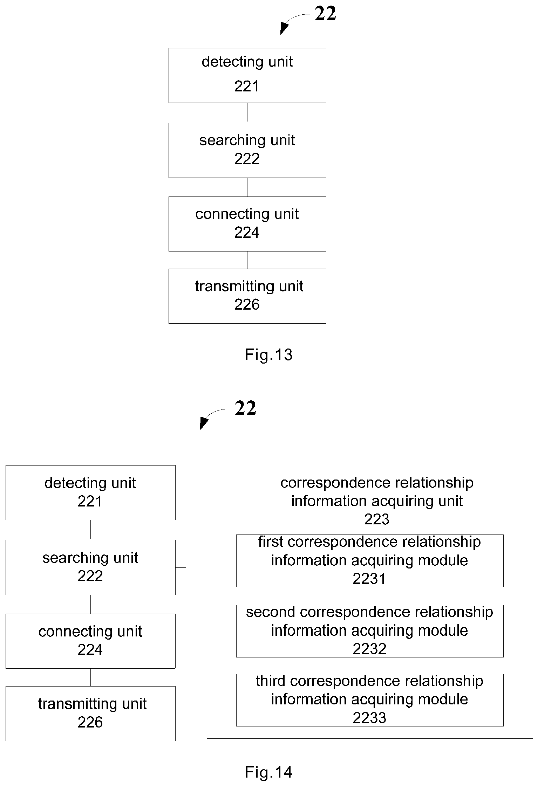

Fig.13 is a schematic diagram showing a further embodiment of the security inspection terminal according to the invention.

As shown in Fig.13, the security inspection terminal according to the present embodiment is a first security inspection terminal 22 further comprising a detecting unit 221 for detecting whether or not a server in the security inspection network system can be accessed by the first security inspection terminal. In response to a detection result indicating that the server can not be accessed, the detecting unit 221 triggers the searching unit 222 to search for a second security inspection terminal which can be accessed by the first security inspection terminal, and in response to a detection result indicating that the server can be accessed, the first security inspection terminal and the second security inspection terminal can communicate through the server.

In an illustrative implementation, the searching unit 222 searches for a second security inspection terminal which can be accessed based on the correspondence relationship information between the first security inspection terminal and the second security inspection terminal in the security inspection network system. Specifically, the searching unit 222 searches for all second security inspection terminals corresponding to the first security inspection terminal based on the correspondence relationship information between the first security inspection terminal and the second security inspection terminal in the security inspection network system, and searches from all the second security inspection terminals corresponding to the first security inspection terminal for a second security inspection terminal which can accessed by way of connectivity test.

Fig.14 is a schematic diagram showing a still further embodiment of the security inspection terminal according to the invention.

As shown in Fig.14, the security inspection terminal according to the present embodiment is a first security inspection terminal 22 further comprising: a correspondence relationship information acquiring unit 223 for acquiring the correspondence relationship information between the first security inspection terminal and the second security inspection terminal in the security inspection network system. The invention provides many methods of acquiring the correspondence relationship information, and a suitable acquiring method can be selected as required by a scenario or a user.

The correspondence relationship information acquiring unit 223 comprises at least one of a first correspondence relationship information acquiring module 2231, a second correspondence relationship information acquiring module 2232 and a third correspondence relationship information acquiring module 2233.

The first correspondence relationship information acquiring module 2231 is used for downloading said correspondence relationship information from said server when said server can be accessed. Further, the correspondence relationship information may be downloaded from the server when the first security inspection terminal is started up, or the correspondence relationship information may be downloaded from the server at pre-determined time or periodically. Such an acquiring method is adapted to a security network system comprising a server. Through such a method, the correspondence relationship information can be acquired or updated more efficiently, and the acquired correspondence relationship information has a better consistency.

The second correspondence relationship information acquiring module 2232 is used for reading pre-configured correspondence relationship information pre-configured in the first security inspection terminal. Such an acquiring method is simple and easily implemented and is adapted to both of a security inspection network system with a server or without a server.

The third correspondence relationship information acquiring module 2232 is used for acquiring said correspondence relationship information by the cooperation of said first security inspection terminal and said second security inspection terminal. Such an acquiring method is adapted to a security inspection network system without a server or a security inspection network system with a server which cannot be currently detected due to a device malfunction or a network malfunction. Regarding the latter, when it is detected that the server in the security inspection network system can not be accessed, an autonomous cooperation manner is initiated for acquiring the correspondence relationship information.

As an illustration of autonomous cooperation manner, the third correspondence relationship information acquiring module 2233 is specifically used for searching all second security inspection terminals to which the first security inspection terminal can be connected, and saving the correspondence information between the first security inspection terminal and all the second security inspection terminals which can be connected. Further, the third correspondence relationship information acquiring module 2233 is further used for searching other first security inspection terminals to which the first security inspection terminal can be connected, and receiving synchronization information sent by the other first security inspection terminals, in which the synchronization information includes information on all second security inspection terminals to which the other first security inspection terminals can be connected. The correspondence relationship information between the other first security inspection terminals and all the second security inspection terminals which can be connected is saved, such that the first security inspection terminal can obtain a latest correspondence relationship between all of the security inspection terminals in the current security inspection network system.

The third correspondence relationship information acquiring module 2233 is further used for synchronizing all the second security inspection terminals which can be connected by the first security inspection terminal with the other security inspection network devices which can be connected by the first security inspection terminal, such that the other security inspection network devices can acquire the correspondence relationship information between the first security inspection terminal and all the second security inspection terminals which can be connected by the first security inspection terminal.

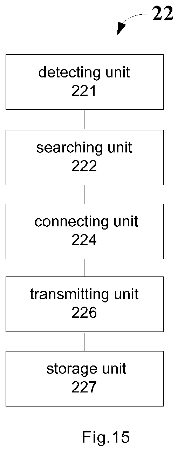

Fig.15 is a schematic diagram showing another embodiment of the security inspection terminal according to the invention.

As shown in Fig.15, the security inspection terminal according to the present embodiment is the first security inspection terminal 22 further comprising a storage unit 227 for storing security inspection data transmitted by the first security inspection terminal and the second security inspection terminal in case where the server can not be accessed, and uploading the stored security inspection data to the server in case where the server can be accessed.

Those skilled in the art should understand that all or a part of the steps in the method of the above embodiments may be realized by hardware or by instructing relative hardware with programs and the programs may be stored in a computer readable storage medium, such as a Read-Only Memory, a magnetic disk or an optical disk.

The skilled in the art may change the specific implementations and application ranges according to the concept in the embodiments of the present invention. In view of the above, the specification shall not be construed as a limit to the present invention.

## Claims

1. A security inspection terminal (22), **characterized in that** said security inspection terminal is a first security inspection terminal and comprises:
a detecting unit for detecting whether a server (36) in a security inspection network system can be accessed or not, and for triggering a searching unit when said server can not be accessed;
said searching unit for searching for a second security inspection terminal (24) which can be accessed by said first security inspection terminal;
a connecting unit for connecting said first security inspection terminal to said second security inspection terminal searched by said searching unit; and
a transmitting unit for transmitting security inspection data between said first security inspection terminal and said second security inspection terminal connected by said connecting unit,
wherein said first security inspection terminal is one of a security inspection device and a workstation in said security inspection network system, and said second security inspection terminal is the other of said security inspection device and said workstation in said security inspection network system.

2. The security inspection terminal according to claim 1, **characterized in that** said searching unit is used for searching for said second security inspection terminal which can be accessed by said first security inspection terminal according to correspondence relationship information between said first security inspection terminal and said second security inspection terminal in said security inspection network system.

3. The security inspection terminal according to claim 2, **characterized in that** said first security inspection terminal further comprises:
a correspondence relationship information acquiring unit for acquiring said correspondence relationship information between said first security inspection terminal and said second security inspection terminal in said security inspection network system,
said correspondence relationship information acquiring unit comprises at least one of a first correspondence relationship information acquiring module, a second correspondence relationship information acquiring module and a third correspondence relationship information acquiring module, wherein:
said first correspondence relationship information acquiring module is used for downloading said correspondence relationship information from said server when said server can be accessed;
said second correspondence relationship information acquiring module is used for reading pre-configured correspondence relationship information; and
said third correspondence relationship information acquiring module is used for acquiring said correspondence relationship information by the cooperation of said first security inspection terminal and said second security inspection terminal.

4. The security inspection terminal according to claim 3, **characterized in that** said third correspondence relationship information acquiring module is used for:
detecting all second security inspection terminals to which said first security inspection terminal can be connected and saving said correspondence relationship information between said first security inspection terminal and all said second security inspection terminals to which said first security inspection terminal can be connected;
or / and
detecting one or a plurality of other first security inspection terminals to which said first security inspection terminal can be connected, and
receiving, from said one or a plurality of other first security inspection terminals, synchronization information including information on all said second security inspection terminals to which said one of a plurality of other first security inspection terminals can be connected, and saving said correspondence relationship information between said one or a plurality of other first security inspection terminals and all said second security inspection terminals to which said one or a plurality of other first security inspection terminal can be connected .

5. The security inspection terminal according to claim 3, **characterized in that** said third correspondence relationship information acquiring module is further used for acquiring said correspondence relationship information by cooperating with said second security inspection terminal when said first security inspection terminal can not access said server in said security inspection network system.

6. The security inspection terminal according to claim 2, **characterized in that** said searching unit is further used for searching for all corresponding second security inspection terminals to said first security inspection terminal based on said correspondence relationship information, and searching for an accessible second security inspection terminal from all corresponding second security inspection terminals by testing the connectivity between said first security inspection terminal and each of corresponding second security inspection terminals.

7. The security inspection terminal according to claim 1, **characterized in that** said first security inspection terminal further comprises:
a storage unit for storing said security inspection data transmitted between said first security inspection terminal and said second security inspection terminal when said server can not be accessed, and uploading said security inspection data to said server when said server can be accessed.

8. A security inspection network system, **characterized in that** said security inspection network system comprises at least one first security inspection terminal according to any one of claims 1-7 and at least one second security inspection terminal,
wherein said first security inspection terminal is one of a security inspection device and a workstation in a security inspection network system, and said second security inspection terminal is the other of said security inspection device and said workstation in said security inspection network system.

9. The security inspection network system according to claim 8, **characterized in that** said security inspection network system further comprises a server.

10. A security inspection data transmission method, **characterized in that** said method comprises:
a detecting step of detecting whether a server in a security inspection network system can be accessed or not ;
searching step of searching for a second security inspection terminal which can be accessed by a first security inspection terminal when said server can not be accessed;
connecting step of connecting said first security inspection terminal to said second security inspection terminal which can be accessed by said first security inspection terminal; and
transmitting step of transmitting security inspection data between said first security inspection terminal and said second security inspection terminal which can be accessed by said first security inspection terminal,
wherein said first security inspection terminal is one of a security inspection device and a workstation in said security inspection network system, and said second security inspection terminal is the other of said security inspection device and said workstation in said security inspection network system.

11. The security inspection data transmission method according to claim 10, **characterized in that** said searching step comprises:
a step of searching for said second security inspection terminal which can be accessed by said first security inspection terminal according to correspondence relationship information between said first security inspection terminal and said second security inspection terminal in said security inspection network system.

12. The security inspection data transmission method according to claim 11, **characterized in that** said first security inspection terminal acquires said correspondence relationship information between said first security inspection terminal and said second security inspection terminal by any one of following steps:
a step of downloading said correspondence relationship information from said server when said server can be accessed;
a step of reading pre-configured correspondence relationship information; and
a step of acquiring said correspondence relationship information by the cooperation of said first security inspection terminal and said second security inspection terminal.

13. The security inspection data transmission method according to claim 12, **characterized in that**, when said correspondence relationship information is acquired in said manner of acquiring said correspondence relationship information by the cooperation of said first security inspection terminal and said second security inspection terminal,
said first security inspection terminal detects all second security inspection terminals to which said first security inspection terminal can be connected and saves correspondence relationship information between said first security inspection terminal and all said second security inspection terminals to which said first security inspection terminal can be connected;
or / and
said first security inspection terminal detects one or a plurality of other first security inspection terminals to which said first security inspection terminal can be connected ; and said first security inspection terminal receives, from said one or a plurality of other first security inspection terminals, synchronization information including information on all said second security inspection terminals to which said one of a plurality of other first security inspection terminals can be connected, and saving said correspondence relationship information between said one or a plurality of other first security inspection terminals and all said second security inspection terminals to which said one or a plurality of other first security inspection terminal can be connected.

14. The security inspection data transmission method according to claim 12, **characterized in that** said correspondence relationship information is acquired by cooperating with said second security inspection terminal when said first security inspection terminal can not access said server in said security inspection network system.

15. The security inspection data transmission method according to claim 11, **characterized in that** said searching step comprises:
first security inspection terminal searches for all corresponding second security inspection terminals to said first security inspection terminal based on said correspondence relationship information, and searching for an accessible second security inspection terminal from all corresponding second security inspection terminals by testing the connectivity between said first security inspection terminal and each of corresponding second security inspection terminals.

16. The security inspection data transmission method according to claim 10, **characterized in that** said method further comprises:
a step of storing said security inspection data transmitted between said first security inspection terminal and said second security inspection terminal when said server can not be accessed, and uploading said security inspection data to said server when said server can be accessed.

## Patentansprüche

1. Sicherheitsprüfungsendgerät (22),
**dadurch gekennzeichnet, dass** das Sicherheitsprüfendgerät ein erstes Sicherheitsprüfungsendgerät ist und Folgendes umfasst:
eine Detektionseinheit, um zu detektieren, ob auf einen Server (36) in einem Sicherheitsprüfungsnetzsystem zugegriffen werden kann oder nicht, und um eine Sucheinheit auszulösen, wenn nicht auf den Server zugegriffen werden kann;
die Sucheinheit, um ein zweites Sicherheitsprüfungsendgerät (24), auf das durch das erste Sicherheitsprüfungsendgerät zugegriffen werden kann, zu suchen;
eine Verbindungseinheit, um das erste Sicherheitsprüfungsendgerät mit dem zweiten Sicherheitsprüfungsendgerät, das durch die Sucheinheit gesucht wird, zu verbinden; und
eine Übertragungseinheit, um Sicherheitsprüfdaten zwischen dem ersten Sicherheitsprüfungsendgerät und dem zweiten Sicherheitsprüfungsendgerät, die durch die Verbindungseinheit verbunden sind, zu übertragen, wobei
das erste Sicherheitsprüfungsendgerät entweder eine Sicherheitsprüfungseinrichtung oder eine Workstation im Sicherheitsprüfungsnetzsystem ist und das zweite Sicherheitsprüfungsendgerät das andere der Sicherheitsprüfungseinrichtung und der Workstation im Sicherheitsprüfungsnetzsystem ist.

2. Sicherheitsprüfungsendgerät nach Anspruch 1, **dadurch gekennzeichnet, dass** die Sucheinheit verwendet wird, das zweite Sicherheitsprüfungsendgerät, auf das gemäß Entsprechungsbeziehungsinformationen zwischen dem ersten Sicherheitsprüfungsendgerät und dem zweiten Sicherheitsprüfungsendgerät im Sicherheitsprüfungsnetzsystem durch das erste Sicherheitsprüfungsendgerät zugegriffen werden kann, zu suchen.

3. Sicherheitsprüfungsendgerät nach Anspruch 2, **dadurch gekennzeichnet, dass** das erste Sicherheitsprüfungsendgerät ferner Folgendes enthält:
eine Entsprechungsbeziehungsinformations-Erfassungseinheit, um die Entsprechungsbeziehungsinformationen zwischen dem ersten Sicherheitsprüfungsendgerät und dem zweiten Sicherheitsprüfungsendgerät im Sicherheitsprüfungsnetzsystem zu erfassen, wobei
die Entsprechungsbeziehungsinformations-Erfassungseinheit ein erstes Entsprechungsbeziehungsinformations-Erfassungsmodul, ein zweites Entsprechungsbeziehungsinformations-Erfassungsmodul und/oder ein drittes Entsprechungsbeziehungsinformations-Erfassungsmodul enthält, wobei
das erste Entsprechungsbeziehungsinformations-Erfassungsmodul verwendet wird, um die Entsprechungsbeziehungsinformationen vom Server herunterzuladen, wenn auf den Server zugegriffen werden kann;
das zweite Entsprechungsbeziehungsinformations-Erfassungsmodul verwendet wird, um vorkonfigurierte Entsprechungsbeziehungsinformationen zu lesen; und
das dritte Entsprechungsbeziehungsinformations-Erfassungsmodul verwendet wird, um die Entsprechungsbeziehungsinformationen durch das Zusammenwirken des ersten Sicherheitsprüfungsendgeräts und des zweiten Sicherheitsprüfungsendgeräts zu erfassen.

4. Sicherheitsprüfungsendgerät nach Anspruch 3, **dadurch gekennzeichnet, dass** das dritte Entsprechungsbeziehungsinformations-Erfassungsmodul zu Folgendem verwendet wird:
Detektieren aller zweiten Sicherheitsprüfungsendgeräte, mit denen das erste Sicherheitsprüfungsendgerät verbunden werden kann, und Speichern der Entsprechungsbeziehungsinformationen zwischen dem ersten Sicherheitsprüfungsendgerät und allen zweiten Sicherheitsprüfungsendgeräten, mit denen das erste Sicherheitsprüfungsendgerät verbunden werden kann; oder/und
Detektieren eines oder mehrerer weiterer erster Sicherheitsprüfungsendgeräte, mit denen das erste Sicherheitsprüfungsendgerät verbunden werden kann, und
Empfangen von dem einen oder den mehreren weiteren ersten Sicherheitsprüfungsendgeräten von Synchronisierungsinformationen, die Informationen über alle zweiten Sicherheitsprüfungsendgeräte, mit denen das eine von mehreren weiteren ersten Sicherheitsprüfungsendgeräten verbunden werden kann, enthalten, und Speichern der Entsprechungsbeziehungsinformationen zwischen dem einen oder den mehreren weiteren ersten Sicherheitsprüfungsendgeräten und allen zweiten Sicherheitsprüfungsendgeräten, mit denen das eine oder die mehreren weiteren ersten Sicherheitsprüfungsendgeräte verbunden werden können.

5. Sicherheitsprüfungsendgerät nach Anspruch 3, **dadurch gekennzeichnet, dass** das dritte Entsprechungsbeziehungsinformations-Erfassungsmodul ferner verwendet wird, um die Entsprechungsbeziehungsinformationen durch Zusammenwirken mit dem zweiten Sicherheitsprüfungsendgerät zu erfassen, wenn das erste Sicherheitsprüfungsendgerät nicht auf den Server im Sicherheitsprüfungsnetzsystem zugreifen kann.

6. Sicherheitsprüfungsendgerät nach Anspruch 2, **dadurch gekennzeichnet, dass** die Sucheinheit ferner verwendet wird, um alle dem ersten Sicherheitsprüfungsendgerät entsprechenden zweiten Sicherheitsprüfungsendgeräte auf der Grundlage der Entsprechungsbeziehungsinformationen zu suchen und ein von allen entsprechenden zweiten Sicherheitsprüfungsendgeräten zugängliches zweites Sicherheitsprüfungsendgerät durch Prüfen der Konnektivität zwischen dem ersten Sicherheitsprüfungsendgerät und jedem der entsprechenden zweiten Sicherheitsprüfungsendgeräte zu suchen.

7. Sicherheitsprüfungsendgerät nach Anspruch 1, **dadurch gekennzeichnet, dass** das erste Sicherheitsprüfungsendgerät ferner Folgendes enthält:
eine Speichereinheit, um die Sicherheitsprüfdaten, die zwischen dem ersten Sicherheitsprüfungsendgerät und dem zweiten Sicherheitsprüfungsendgerät übertragen werden, wenn nicht auf den Server zugegriffen werden kann, zu speichern und die Sicherheitsprüfdaten auf den Server zu hochzuladen, wenn auf den Server zugegriffen werden kann.

8. Sicherheitsprüfungsnetzsystem, **dadurch gekennzeichnet, dass** das Sicherheitsprüfungsnetzsystem mindestens ein erstes Sicherheitsprüfungsendgerät nach einem der Ansprüche 1-7 und mindestens ein zweites Sicherheitsprüfungsendgerät enthält, wobei
das erste Sicherheitsprüfungsendgerät entweder eine Sicherheitsprüfungseinrichtung oder eine Workstation im Sicherheitsprüfungsnetzsystem ist und das zweite Sicherheitsprüfungsendgerät das andere der Sicherheitsprüfungseinrichtung und der Workstation im Sicherheitsprüfungsnetzsystem ist.

9. Sicherheitsprüfungsnetzsystem nach Anspruch 8, **dadurch gekennzeichnet, dass** das Sicherheitsprüfungsnetzsystem ferner einen Server enthält.

10. Sicherheitsprüfungsdatenübertragungsverfahren, **dadurch gekennzeichnet, dass** das Verfahren Folgendes enthält:
einen Detektionsschritt des Detektierens, ob auf einen Server in einem Sicherheitsprüfungsnetzsystem zugegriffen werden kann oder nicht;
einen Suchschritt des Suchens eines zweiten Sicherheitsprüfungsendgeräts, auf das durch ein erstes Sicherheitsprüfungsendgerät zugegriffen werden kann, wenn nicht auf den Server zugegriffen werden kann;
einen Verbindungsschritt des Verbindens des ersten Sicherheitsprüfungsendgeräts mit dem zweiten Sicherheitsprüfungsendgerät, auf das durch das erste Sicherheitsprüfungsendgerät zugegriffen werden kann; und
einen Übertragungsschritt des Übertragens von Sicherheitsprüfdaten zwischen dem ersten Sicherheitsprüfungsendgerät und dem zweiten Sicherheitsprüfungsendgerät, auf das durch das erste Sicherheitsprüfungsendgerät zugegriffen werden kann, wobei
das erste Sicherheitsprüfungsendgerät entweder eine Sicherheitsprüfungseinrichtung oder eine Workstation im Sicherheitsprüfungsnetzsystem ist und das zweite Sicherheitsprüfungsendgerät das andere der Sicherheitsprüfungseinrichtung und der Workstation im Sicherheitsprüfungsnetzsystem ist.

11. Sicherheitsprüfungsdatenübertragungsverfahren nach Anspruch 10, **dadurch gekennzeichnet, dass** der Suchschritt Folgendes umfasst:
einen Suchschritt des Suchens des zweiten Sicherheitsprüfungsendgeräts, auf das gemäß Entsprechungsbeziehungsinformationen zwischen dem ersten Sicherheitsprüfungsendgerät und dem zweiten Sicherheitsprüfungsendgerät im Sicherheitsprüfungsnetzsystem durch das erste Sicherheitsprüfungsendgerät zugegriffen werden kann.

12. Sicherheitsprüfungsdatenübertragungsverfahren nach Anspruch 11, **dadurch gekennzeichnet, dass** das erste Sicherheitsprüfungsendgerät die Entsprechungsbeziehungsinformationen zwischen dem ersten Sicherheitsprüfungsendgerät und dem zweiten Sicherheitsprüfungsendgerät im Sicherheitsprüfungsnetzsystem durch einen der folgenden Schritte erfasst:
einen Schritte des Herunterladens der Entsprechungsbeziehungsinformationen vom Server, wenn auf den Server zugegriffen werden kann;
einen Schritt des Lesens vorkonfigurierter Entsprechungsbeziehungsinformationen; und
einen Schritt des Erfassens der Entsprechungsbeziehungsinformationen durch das Zusammenwirken des ersten Sicherheitsprüfungsendgeräts und des zweiten Sicherheitsprüfungsendgeräts.

13. Sicherheitsprüfungsdatenübertragungsverfahren nach Anspruch 12, **dadurch gekennzeichnet, dass** dann, wenn die Entsprechungsbeziehungsinformationen in der Weise des Erfassens der Entsprechungsbeziehungsinformationen durch das Zusammenwirken des ersten Sicherheitsprüfungsendgeräts und des zweiten Sicherheitsprüfungsendgeräts erfasst wurden,
das erste Sicherheitsprüfungsendgerät alle zweiten Sicherheitsprüfungsendgeräte, mit denen das erste Sicherheitsprüfungsendgerät verbunden werden kann, detektiert und die Entsprechungsbeziehungsinformationen zwischen dem ersten Sicherheitsprüfungsendgerät und allen zweiten Sicherheitsprüfungsendgeräten, mit denen das erste Sicherheitsprüfungsendgerät verbunden werden kann, speichert; oder/und
das erste Sicherheitsprüfungsendgerät eines oder mehrere weiterer erster Sicherheitsprüfungsendgeräte, mit denen das erste Sicherheitsprüfungsendgerät verbunden werden kann, detektiert; und
das erste Sicherheitsprüfungsendgerät von dem einen oder den mehreren weiteren ersten Sicherheitsprüfungsendgeräten Synchronisierungsinformationen, die Informationen über alle zweiten Sicherheitsprüfungsendgeräte, mit denen das eine von mehreren weiteren ersten Sicherheitsprüfungsendgeräten verbunden werden kann, enthalten, empfängt und die Entsprechungsbeziehungsinformationen zwischen dem einen oder den mehreren weiteren ersten Sicherheitsprüfungsendgeräten und allen zweiten Sicherheitsprüfungsendgeräten, mit denen das eine oder die mehreren weiteren ersten Sicherheitsprüfungsendgeräte verbunden werden können, speichert.

14. Sicherheitsprüfungsdatenübertragungsverfahren nach Anspruch 12, **dadurch gekennzeichnet, dass** die Entsprechungsbeziehungsinformationen durch Zusammenwirken mit dem zweiten Sicherheitsprüfungsendgerät erfasst werden, wenn das erste Sicherheitsprüfungsendgerät nicht auf den Server im Sicherheitsprüfungsnetzsystem zugreifen kann.

15. Sicherheitsprüfungsdatenübertragungsverfahren nach Anspruch 11, **dadurch gekennzeichnet, dass** der Suchschritt Folgendes umfasst:
das erste Sicherheitsprüfungsendgerät sucht alle dem ersten Sicherheitsprüfungsendgerät entsprechenden zweiten Sicherheitsprüfungsendgeräte auf der Grundlage der Entsprechungsbeziehungsinformationen und sucht ein von allen entsprechenden zweiten Sicherheitsprüfungsendgeräten zugängliches zweites Sicherheitsprüfungsendgerät durch Prüfen der Konnektivität zwischen dem ersten Sicherheitsprüfungsendgerät und jedem der entsprechenden zweiten Sicherheitsprüfungsendgeräte.

16. Sicherheitsprüfungsdatenübertragungsverfahren nach Anspruch 10, **dadurch gekennzeichnet, dass** das Verfahren ferner Folgendes umfasst:
einen Schritt des Speicherns von Sicherheitsprüfdaten, die zwischen dem ersten Sicherheitsprüfungsendgerät und dem zweiten Sicherheitsprüfungsendgerät übertragen werden, wenn nicht auf den Server zugegriffen werden kann, und Hochladen der Sicherheitsprüfdaten auf den Server, wenn auf den Server zugegriffen werden kann.

## Revendications

1. Terminal d'inspection de sécurité (22), **caractérisé en ce que** ledit terminal d'inspection de sécurité est un premier terminal d'inspection de sécurité et comprend :
une unité de détection pour détecter si un serveur (36) présent dans un système de réseau d'inspection de sécurité est ou non accessible, et pour déclencher une unité de recherche lorsque ledit serveur n'est pas accessible ;
ladite unité de recherche servant à rechercher un deuxième terminal d'inspection de sécurité (24) auquel ledit premier terminal d'inspection de sécurité peut accéder ;
une unité de connexion pour connecter ledit premier terminal d'inspection de sécurité audit deuxième terminal d'inspection de sécurité recherché par ladite unité de recherche ; et
une unité de transmission pour transmettre des données d'inspection de sécurité entre ledit premier terminal d'inspection de sécurité et ledit deuxième terminal d'inspection de sécurité connecté par ladite unité de connexion,
dans lequel ledit premier terminal d'inspection de sécurité est l'un d'un dispositif d'inspection de sécurité et d'un poste de travail dans ledit système de réseau d'inspection de sécurité, et ledit deuxième terminal d'inspection de sécurité est l'autre dudit dispositif d'inspection de sécurité et dudit poste de travail dans ledit système de réseau d'inspection de sécurité.

2. Terminal d'inspection de sécurité selon la revendication 1, **caractérisé en ce que** ladite unité de recherche est utilisée pour rechercher ledit deuxième terminal d'inspection de sécurité auquel peut accéder ledit premier terminal d'inspection de sécurité conformément à des informations de relation de correspondance entre ledit premier terminal d'inspection de sécurité et ledit deuxième terminal d'inspection de sécurité dans ledit système de réseau d'inspection de sécurité.

3. Terminal d'inspection de sécurité selon la revendication 2, **caractérisé en ce que** ledit premier terminal d'inspection de sécurité comprend en outre :
une unité d'acquisition d'informations de relation de correspondance pour acquérir lesdites informations de relation de correspondance entre ledit premier terminal d'inspection de sécurité et ledit deuxième terminal d'inspection de sécurité dans ledit système de réseau d'inspection de sécurité,
ladite unité d'acquisition d'informations de relation de correspondance comprend au moins l'un d'un premier module d'acquisition d'informations de correspondance, d'un deuxième module d'acquisition d'informations de correspondance et d'un troisième module d'acquisition d'informations de relation de correspondance, dans lequel :
ledit premier module d'acquisition d'informations de relation de correspondance est utilisé pour télécharger lesdites informations de relation de correspondance à partir dudit serveur lorsque ledit serveur est accessible ;
ledit deuxième module d'acquisition d'informations de relation de correspondance est utilisé pour lire des informations de relation de correspondance préconfigurées ; et
ledit troisième module d'acquisition d'informations de relation de correspondance est utilisé pour acquérir lesdites informations de relation de correspondance au moyen de la coopération dudit premier terminal d'inspection de sécurité et dudit deuxième terminal d'inspection de sécurité.

4. Terminal d'inspection de sécurité selon la revendication 3, **caractérisé en ce que** ledit troisième module d'acquisition d'informations de relation de correspondance est utilisé pour :
détecter la totalité des deuxièmes terminaux d'inspection de sécurité auxquels ledit premier terminal d'inspection de sécurité peut être connecté et sauvegarder lesdites informations de relation de correspondance entre ledit premier terminal d'inspection de sécurité et la totalité desdits deuxièmes terminaux d'inspection de sécurité auxquels ledit premier terminal d'inspection de sécurité peut être connecté ;
ou/et
détecter un ou plusieurs autres premiers terminaux d'inspection de sécurité auxquels ledit premier terminal d'inspection de sécurité peut être connecté, et
recevoir, en provenance dudit un ou d'une pluralité d'autres premiers terminaux d'inspection de sécurité, des informations de synchronisation contenant des informations concernant la totalité desdits deuxièmes terminaux d'inspection de sécurité auxquels ledit un d'une pluralité d'autres premiers terminaux d'inspection de sécurité peuvent être connectés, et sauvegarder lesdites informations de relation de correspondance entre ledit un ou une pluralité d'autres premiers terminaux d'inspection de sécurité et la totalité desdits deuxièmes terminaux d'inspection de sécurité auxquels ledit un ou une pluralité d'autres premiers terminaux d'inspection de sécurité peuvent être connectés.

5. Terminal d'inspection de sécurité selon la revendication 3, **caractérisé en ce que** ledit troisième module d'acquisition d'informations de relation de correspondance est en outre utilisé pour acquérir lesdites informations de relation de correspondance en coopérant avec ledit deuxième terminal d'inspection de sécurité lorsque ledit premier terminal d'inspection de sécurité ne peut pas accéder audit serveur dans ledit système réseau d'inspection de sécurité.

6. Terminal d'inspection de sécurité selon la revendication 2, **caractérisé en ce que** ladite unité de recherche est en outre utilisée pour rechercher la totalité des deuxièmes terminaux d'inspection de sécurité correspondants sur ledit premier terminal d'inspection de sécurité, sur la base desdites informations de relation de correspondance, et pour rechercher un deuxième terminal d'inspection de sécurité accessible parmi la totalité des deuxièmes terminaux d'inspection de sécurité correspondants en testant la connectivité entre ledit premier terminal d'inspection de sécurité et chacun des deuxièmes terminaux d'inspection de sécurité correspondants.

7. Terminal d'inspection de sécurité selon la revendication 1, **caractérisé en ce que** ledit premier terminal d'inspection de sécurité comprend en outre :
une unité de stockage pour stocker lesdites données d'inspection de sécurité transmises entre ledit premier terminal d'inspection de sécurité et ledit deuxième terminal d'inspection de sécurité lorsque ledit serveur n'est pas accessible, et télécharger lesdites données d'inspection de sécurité vers ledit serveur lorsque ledit serveur est accessible.

8. Système de réseau d'inspection de sécurité, **caractérisé en ce que** ledit système de réseau d'inspection de sécurité comprend au moins un premier terminal d'inspection de sécurité selon l'une quelconque des revendications 1 à 7 et au moins un deuxième terminal d'inspection de sécurité, ledit premier terminal d'inspection de sécurité,
dans lequel ledit premier terminal d'inspection de sécurité est l'un d'un dispositif d'inspection de sécurité et d'un poste de travail dans un système de réseau d'inspection de sécurité, et ledit deuxième terminal d'inspection de sécurité est l'autre dudit dispositif d'inspection de sécurité et dudit poste de travail dans ledit système de réseau d'inspection de sécurité.

9. Système de réseau d'inspection de sécurité selon la revendication 8, **caractérisé en ce que** ledit système de réseau d'inspection de sécurité comprend en outre un serveur.

10. Procédé de transmission de données d'inspection de sécurité, **caractérisé en ce que** ledit procédé comprend :
une étape de détection consistant à détecter si un serveur d'un système de réseau d'inspection de sécurité est ou non accessible ;
une étape de recherche consistant à rechercher un deuxième terminal d'inspection de sécurité auquel peut accéder un premier terminal d'inspection de sécurité lorsque ledit serveur n'est pas accessible ;
une étape de connexion consistant à connecter ledit premier terminal d'inspection de sécurité audit deuxième terminal d'inspection de sécurité auquel peut accéder ledit premier terminal d'inspection de sécurité ; et
une étape de transmission de données d'inspection de sécurité entre ledit premier terminal d'inspection de sécurité et ledit deuxième terminal d'inspection de sécurité auquel peut accéder ledit premier terminal d'inspection de sécurité,
dans lequel ledit premier terminal d'inspection de sécurité est l'un d'un dispositif d'inspection de sécurité et d'un poste de travail dans ledit système de réseau d'inspection de sécurité, et ledit deuxième terminal d'inspection de sécurité est l'autre dudit dispositif d'inspection de sécurité et dudit poste de travail dans ledit système de réseau d'inspection de sécurité.

11. Procédé de transmission de données d'inspection de sécurité selon la revendication 10, **caractérisé en ce que** ladite étape de recherche comprend :
une étape consistant à rechercher ledit deuxième terminal d'inspection de sécurité auquel peut accéder ledit premier terminal d'inspection de sécurité conformément à des informations de relation de correspondance entre ledit premier terminal d'inspection de sécurité et ledit deuxième terminal d'inspection de sécurité dans ledit système de réseau d'inspection de sécurité.

12. Procédé de transmission de données d'inspection de sécurité selon la revendication 11, **caractérisé en ce que** ledit premier terminal d'inspection de sécurité acquiert lesdites informations de relation de correspondance entre ledit premier terminal d'inspection de sécurité et ledit deuxième terminal d'inspection de sécurité par l'une quelconque des étapes suivantes :
une étape consistant à télécharger lesdites informations de relation de correspondance à partir dudit serveur lorsque ledit serveur est accessible ;
une étape consistant à lire des informations de relation de correspondance préconfigurées ; et
une étape consistant à acquérir lesdites informations de relation de correspondance au moyen de la coopération dudit premier terminal d'inspection de sécurité et dudit deuxième terminal d'inspection de sécurité.

13. Procédé de transmission de données d'inspection de sécurité selon la revendication 12, **caractérisé en ce que**, lorsque lesdites informations de relation de correspondance sont acquises par ladite méthode d'acquisition desdites informations de relation de correspondance au moyen de la coopération dudit premier terminal d'inspection de sécurité et dudit deuxième terminal d'inspection de sécurité,
ledit premier terminal d'inspection de sécurité détecte la totalité des deuxièmes terminaux d'inspection de sécurité auxquels ledit premier terminal d'inspection de sécurité peut être connecté et sauvegarde des informations de relation de correspondance entre lesdits premiers terminaux d'inspection de sécurité et la totalité desdits deuxièmes terminaux d'inspection de sécurité auxquels ledit premier terminal d'inspection de sécurité peut être connecté ;
ou/et
ledit premier terminal d'inspection de sécurité détecte l'un ou une pluralité d'autres premiers terminaux d'inspection de sécurité auxquels ledit premier terminal d'inspection de sécurité peut être connecté ; et
ledit premier terminal d'inspection de sécurité reçoit, en provenance dudit un ou d'une pluralité d'autres premiers terminaux d'inspection de sécurité, des informations de synchronisation contenant des informations concernant la totalité desdits deuxièmes terminaux d'inspection de sécurité auxquels ledit un d'une pluralité de premiers terminaux d'inspection de sécurité peut être connecté, et sauvegarde lesdites informations de relation de correspondance entre ledit un ou une pluralité d'autres premiers terminaux d'inspection de sécurité et la totalité desdits deuxièmes terminaux d'inspection de sécurité auxquels ledit un ou une pluralité d'autres premiers terminaux d'inspection de sécurité peuvent être connectés.

14. Procédé de transmission de données d'inspection de sécurité selon la revendication 12, **caractérisé en ce que** lesdites informations de relation de correspondance sont acquises en coopérant avec ledit deuxième terminal d'inspection de sécurité lorsque ledit premier terminal d'inspection de sécurité ne peut pas accéder audit serveur dans ledit système de réseau d'inspection de sécurité.

15. Procédé de transmission de données d'inspection de sécurité selon la revendication 11, **caractérisé en ce que** ladite étape de recherche comprend :
le fait qu'un premier terminal d'inspection de sécurité recherche la totalité des deuxièmes terminaux d'inspection de sécurité correspondants sur ledit premier terminal d'inspection de sécurité, sur la base desdites informations de relation de correspondance, et recherche un deuxième terminal d'inspection de sécurité accessible parmi la totalité des deuxièmes terminaux d'inspection de sécurité correspondants en testant la connectivité entre ledit premier terminal d'inspection de sécurité et chacun de deuxièmes terminaux d'inspection de sécurité correspondants.

16. Procédé de transmission de données d'inspection de sécurité selon la revendication 10, **caractérisé en ce que** ledit procédé comprend en outre :
une étape consistant à stocker lesdites données d'inspection de sécurité transmises entre ledit premier terminal d'inspection de sécurité et ledit deuxième terminal d'inspection de sécurité lorsque ledit serveur n'est pas accessible, et télécharger lesdites données d'inspection de sécurité vers ledit serveur lorsque ledit serveur est accessible.
